# EUROPEAN PATENT APPLICATION

(11) **EP 4 498 667 A1**
(43) Date of publication of application: **29.01.2025**
(21) Application number: 23774827.2
(22) Date of filing: 17.03.2023
(51) Int. Cl.: H04N 1/00, B41J 29/38, B41J 29/42, G03G 21/00, G06F 3/0482, G06F 3/04842

(54) **IMAGE PROCESSING DEVICE AND JOB MANAGEMENT PROGRAM**

(30) Priority: 22.03.2022 JP 2022045763
(71) Applicant: KYOCERA Document Solutions Inc., Osaka-shi, Osaka, 540-8585 (JP)
(72) Inventor: FUJIKAWA, Takuma, Osaka-shi, Osaka 540-8585 (JP); FUJIWARA, Nobushiro, Osaka-shi, Osaka 540-8585 (JP)
(74) Representative: Herrero & Asociados, S.L.
(86) International application number: PCT/JP2023/010703
(87) International publication number: WO 2023/182232

(57) **Abstract**

An image processing apparatus (10) includes a controller (29), wherein the controller (29) allows a display device (21) to display a job execution history in which respective sets of setting data on a plurality of jobs are chronologically arranged, when a touch panel (23) accepts a specification instruction for specifying the set of setting data on a job in the job execution history, the controller (29) allows the display device (21) to display a pop-up window for use in instructing a change in the set of setting data specified by the specification instruction, and when the touch panel (23) accepts through the pop-up window a change instruction to change the specified set of setting data, the controller (29) generates a set of setting data on a different job in which contents of the change instruction are reflected, and allows the set of setting data on the different job to be displayed in the job execution history.

## Description

### Technical Field

The present invention relates to image processing apparatuses and job management programs and particularly relates to a technique for simplifying operation in executing a job.

### Background Art

For example, in an image processing apparatus, prior to execution of a copy job, a print job or like jobs, an operation for specifying a set of setting data on the job, including color or black-and-white print and the number of copies printed, is performed. However, with increasing range of functions of the image processing apparatus, the operation for specifying a set of setting data on a job becomes complicated and, therefore, time and effort may be required on the operation. Therefore, for example, an attempt to simplify the operation has been made by saving respective sets of setting data on jobs as history information, setting a set of setting data on another job based on the history information, and using the set of setting data set in this manner to execute the job.

In an image processing apparatus described in Patent Literature 1, a home screen for selecting any one of a plurality of functions is displayed on a display device and the home screen is provided with an integrated history area where a plurality of history buttons are displayed in a row. Each time a job associated with a function selected on the home screen is executed, a history button is generated and displayed in the integrated history area. Each history button shows a job and a set of setting data on the job. When any one of the history buttons in the integrated history area is operated, a setting screen for the function associated with the operated history button is displayed on the display device and the set of setting data in the history button is displayed on the setting screen for the function. When in this state a Start key is operated, a job is executed based on the set of setting data on the setting screen associated with the history button. The set of setting data contains a plurality of setting values. Some of the setting values are setting values to be used as they are, others are setting values to be used after being automatically changed.

### Citation List

### Patent Literature

Patent Literature 1: JP-A-2019-119139

### Summary of Invention

Patent Literature 1 discloses a technique of allowing the display device to display a setting screen for a function associated with a history button operated in the integrated history area, allowing the set of setting data in the operated history button to be displayed on the setting screen for the function, and executing a job based on the set of setting data on the setting screen.

In the technique disclosed in Patent Literature 1, when, in using the set of setting data in a history button, the user wants to change any setting value of the set of setting data, the user needs to take an operating procedure of first operating the history button to allow a setting screen for the function associated with the history button to be displayed and then changing the setting value on the setting screen. Therefore, time and effort is required on the operation.

The present invention has been made in view of the above circumstances and has an object of simplifying, in changing a set of setting data on a previously executed job and executing another job based on the set of setting data, an operating procedure necessary from change in the set of setting data to execution of the other job.

An image processing apparatus according to an aspect of the present invention includes a display device and an operation device that accepts an instruction in response to a user's operation. The image processing apparatus allows the display device to display a job execution history in which respective sets of setting data on a plurality of jobs are chronologically arranged, when the operation device accepts a specification instruction for specifying the set of setting data on a job in the job execution history, the image processing apparatus allows the display device to display a setting change window for use in instructing a change in the set of setting data specified by the specification instruction. When the operation device accepts through the setting change window a change instruction to change the specified set of setting data, the image processing apparatus generates a set of setting data on a different job in which the specified set of setting data on the job has been changed in accordance with contents indicated by the change instruction, and allows the set of setting data on the different job to be displayed in the job execution history.

A job management program according to another aspect of the present invention allows a computer included in an image processing apparatus, the image processing apparatus including a display device and an operation device that accepts an instruction in response to a user's operation, to function as a controller that allows the display device to display a job execution history in which respective sets of setting data on a plurality of jobs are chronologically arranged, wherein when the operation device accepts a specification instruction for specifying the set of setting data on a job in the job execution history, the controller allows the display device to display a setting change window for use in instructing a change in the set of setting data specified by the specification instruction, and when the operation device accepts through the setting change window a change instruction to change the specified set of setting data, the controller generates a set of setting data on a different job in which the specified set of setting data on the job has been changed in accordance with contents indicated by the change instruction, and allows the set of setting data on the different job to be displayed in the job execution history.

### Advantageous Effects of Invention

The present invention enables, in changing a set of setting data on a previously executed job and executing another job based on the set of setting data, simplification of an operating procedure necessary from change in the set of setting data to execution of the other job.

### Brief Description of Drawings

[Fig. 1]

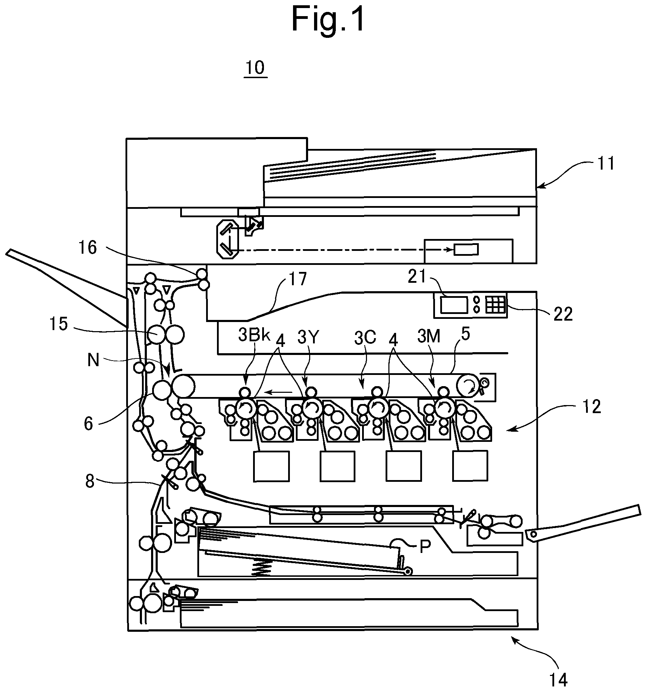

   Fig. 1 is a cross-sectional view showing an image processing apparatus according to an embodiment of the present invention.
[Fig. 2]

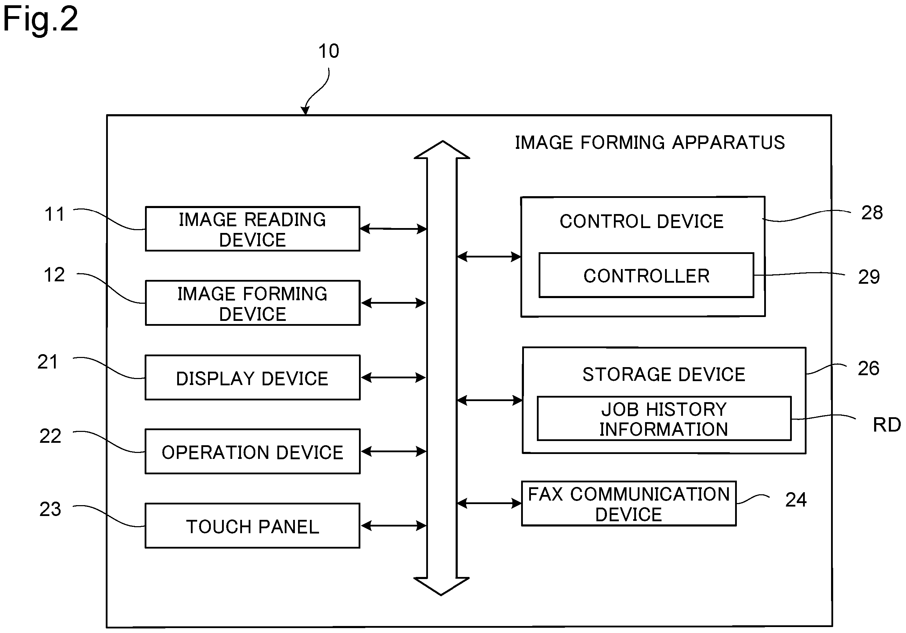

   Fig. 2 is a block diagram showing the image processing apparatus.
[Fig. 3]

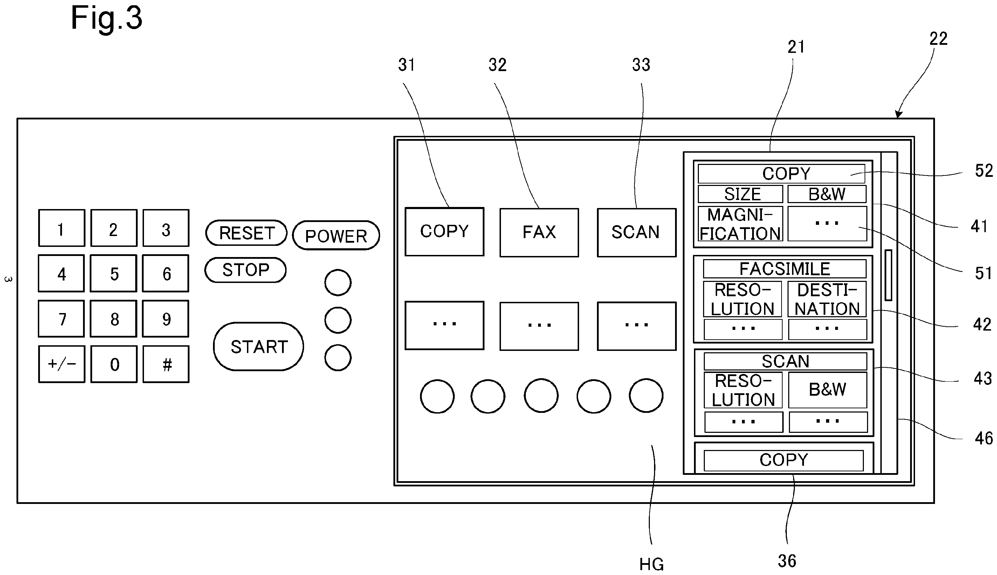

   Fig. 3 is a view showing an example of a home screen.
[Fig. 4]

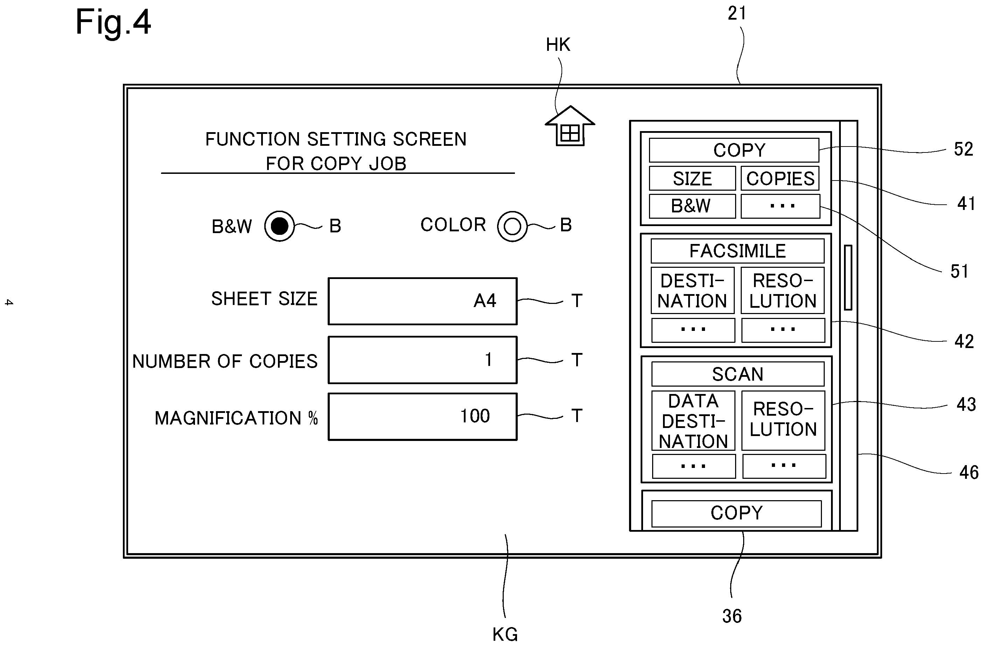

   Fig. 4 is a view showing an example of a function setting screen for a copy job.
[Fig. 5]

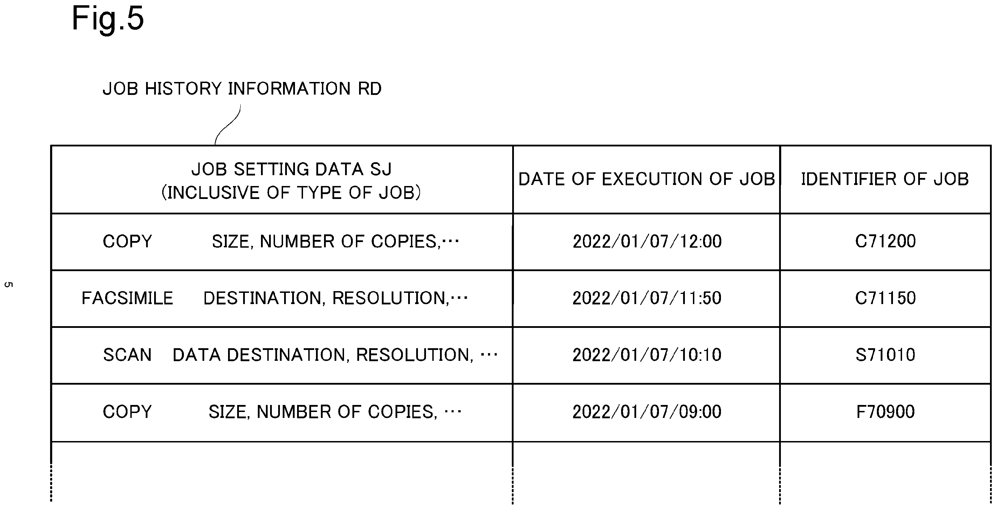

   Fig. 5 is a table conceptually showing a job history information.
[Fig. 6]

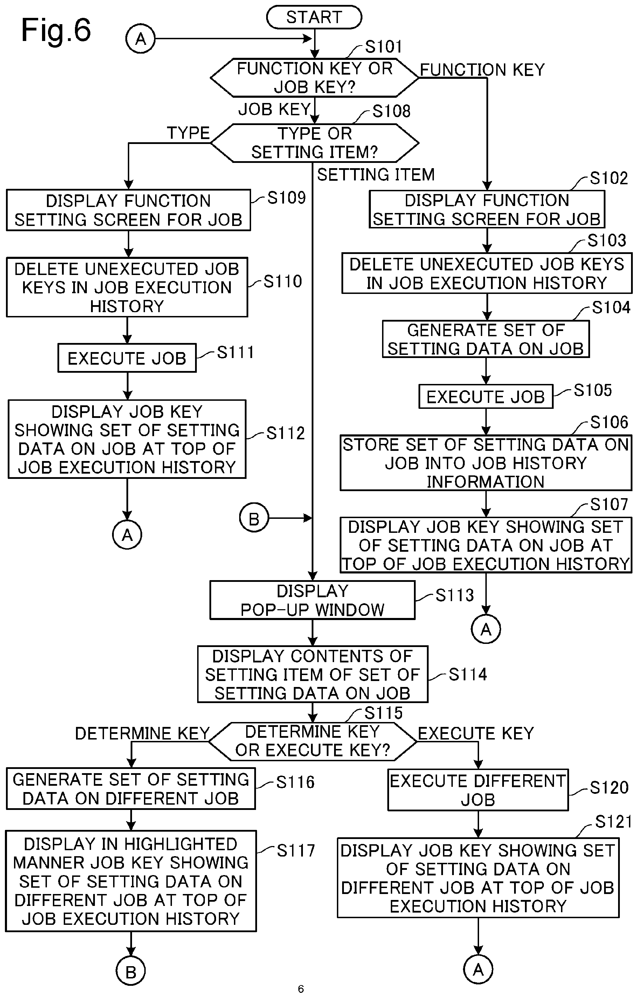

   Fig. 6 is a flowchart showing a control procedure of job setting processing.
[Fig. 7A]

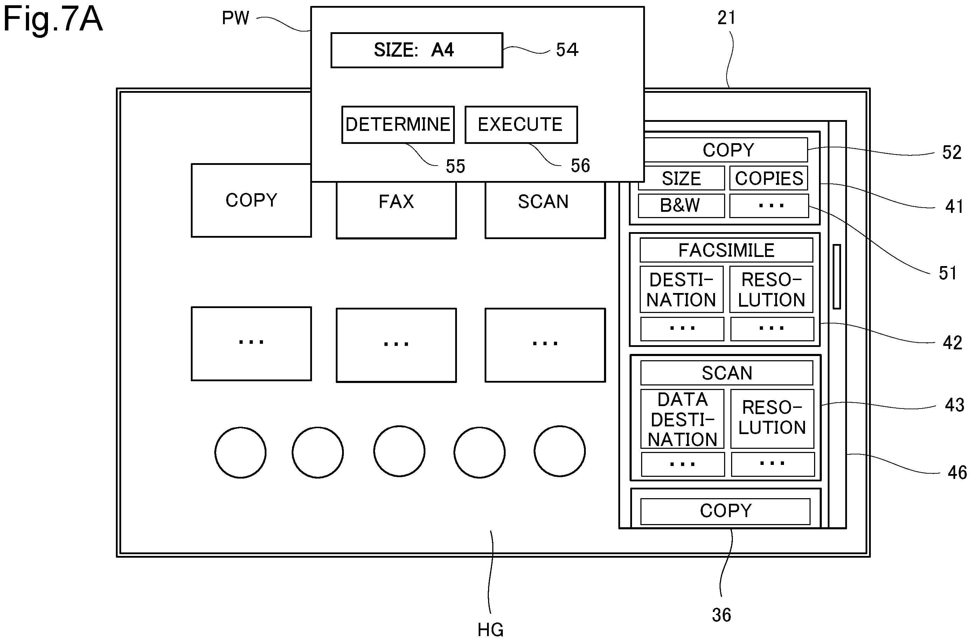

   Fig. 7A is a view showing an example of a pop-up window before a setting item is changed.
[Fig. 7B]

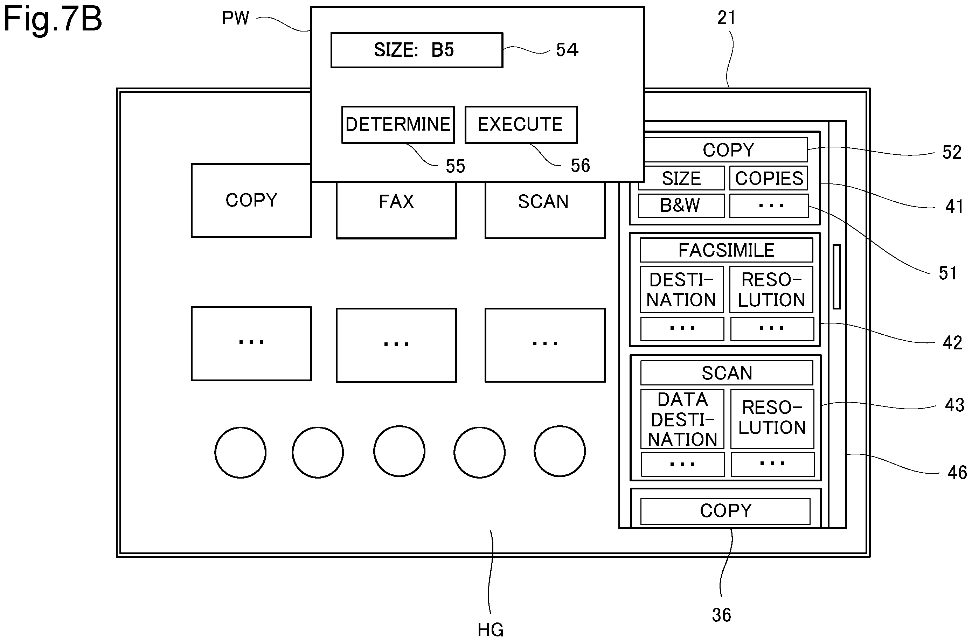

   Fig. 7B is a view showing an example of a pop-up window after the setting item is changed.
[Fig. 8]

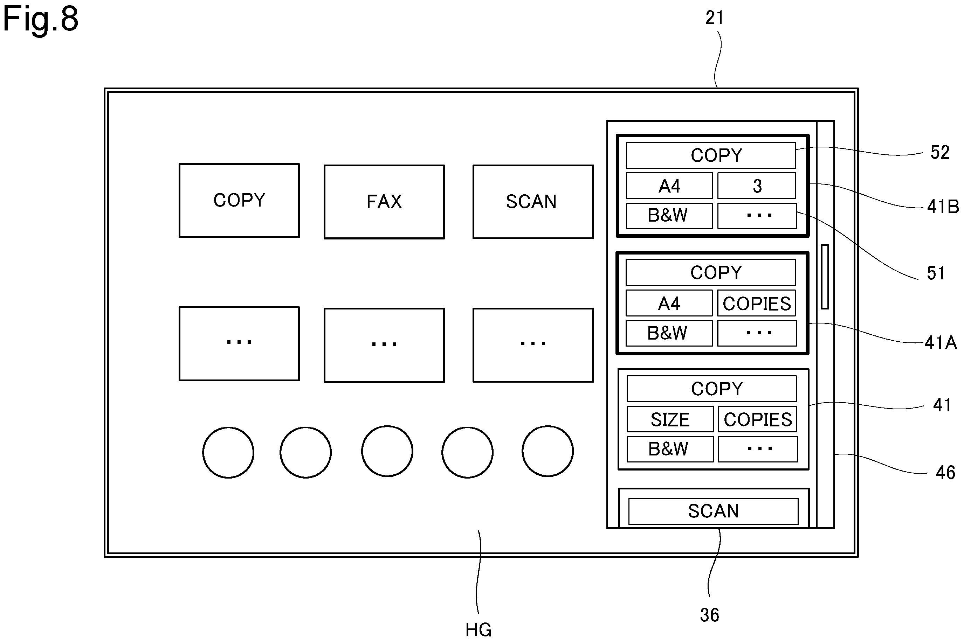

   Fig. 8 is a view showing a state where job keys are arranged and highlighted.
[Fig. 9]

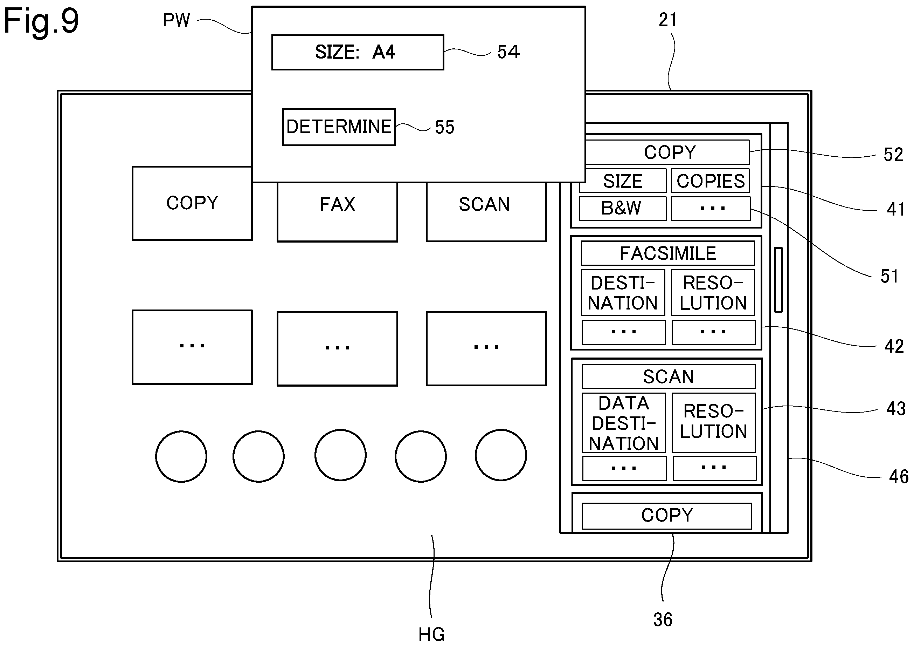

   Fig. 9 is a view showing a modification of a pop-up window.
[Fig. 10]

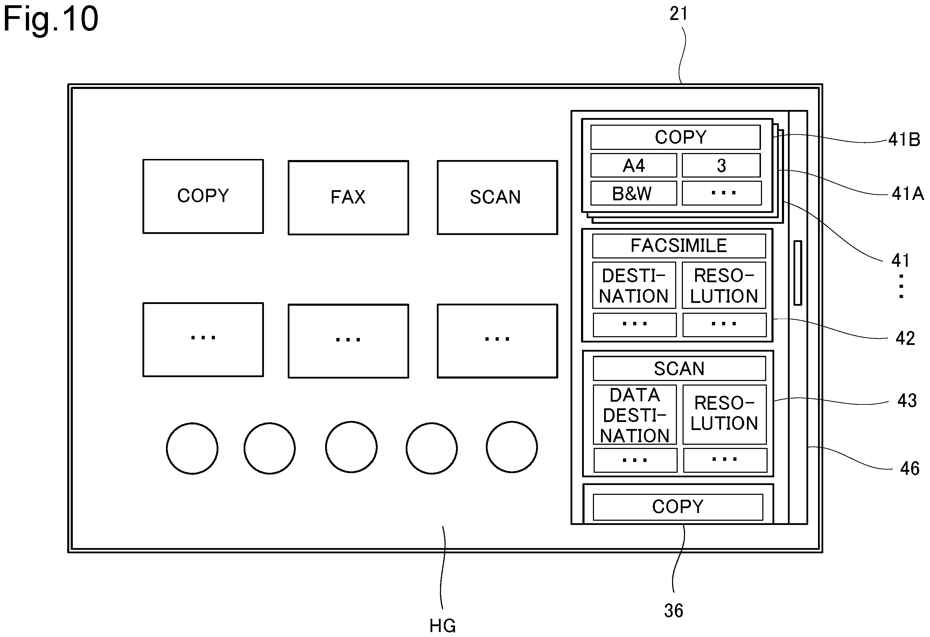

   Fig. 10 is a view showing a state where job keys are displayed in a series of overlaid layers.

### Description of Embodiments

Hereinafter, a description will be given of an image processing apparatus according to an embodiment of the present invention with reference to the drawings.

Fig. 1 is a cross-sectional view showing an image processing apparatus 10 according to an embodiment of the present invention. As shown in Fig. 1, the image processing apparatus 10 is an MFP (multifunction peripheral) combining a plurality of functions, such as, for example, a copy function, a print function, and a facsimile function. The image processing apparatus 10 includes an image reading device 11 and an image forming device 12.

The image reading device 11 includes an image pickup device (a CCD sensor) capable of optically reading an image of an original document. The image reading device 11 converts an analog output of the image pickup device to a digital signal to generate image data representing the image of the original document.

The image forming device 12 forms an image represented by the image data on a recording paper sheet. The image forming device 12 includes an image forming unit 3M for magenta, an image forming unit 3C for cyan, an image forming unit 3Y for yellow, and an image forming unit 3Bk for black. Each of these image forming units 3M, 3C, 3Y, and 3Bk uniformly charges the surface of a photosensitive drum 4, exposes the surface of the photosensitive drum 4 to light to form an electrostatic latent image on the surface of the photosensitive drum 4, develops the electrostatic latent image on the surface of the photosensitive drum 4 into a toner image, and primarily transfers the toner image on the surface of the photosensitive drum 4 to an intermediate transfer belt 5. Thus, a multicolor toner image is formed on the intermediate transfer belt 5. The multicolor toner image is secondarily transferred, at a nip region N between the intermediate transfer belt 5 and a secondary transfer roller 6, to a recording paper sheet P conveyed from a sheet feed device 14 via a conveyance path 8.

A fixing device 15 applies heat and pressure to the recording paper sheet P to fix the toner image on the recording paper sheet P by heat and pressure. The recording paper sheet P is ejected through an ejection roller 16 to a sheet output tray 17.

Fig. 2 is a block diagram showing an essential internal configuration of the image processing apparatus 10. As shown in FIG. 2, the image processing apparatus 10 includes the image reading device 11, the image forming device 12, a display device 21, an operation device 22, a touch panel 23, a facsimile communication device 24, a storage device 26, and a control device 28. These components are capable of data or signal transfer via a bus among them.

The display device 21 is formed of a liquid crystal display (LCD), an organic EL (organic light-emitting diode (OLED)) display or the like.

The operation device 22 includes physical keys, including numeric keys, an Enter key, and a Start key. The operation device 22 accepts various instructions in response to user's operations on the keys.

The touch panel 23 is disposed over the screen of the display device 21. The touch panel 23 is a touch panel of a resistive film system, a capacitance system or any other system. The touch panel 23 detects a touch on the touch panel 23 with a user's finger or the like, together with a point of the touch, and outputs a detection signal indicating the coordinate of the point of touch to a later-described controller 29 of the control device 28 and so on. The touch panel 23 and the operation device 22 are examples of an operation device defined in Claims.

The storage device 26 is a large storage device, such as an SSD (solid state drive) or an HDD (hard disk drive). The storage device 26 holds various types of application programs and various types of data.

The control device 28 is made up of a processor, a RAM (random access memory), a ROM (read only memory), and so on. The processor is, for example, a CPU (central processing unit), an ASIC (application specific integrated circuit) or an MPU (micro processing unit). When a job management program stored in the above-described ROM or the storage device 26 is executed by the above processor, the control device 28 functions as a controller 29. The processor is an example of a computer defined in Claims.

The controller 29 provides overall control of the image processing apparatus 10. The control device 28 is connected to the image reading device 11, the image forming device 12, the display device 21, the operation device 22, the touch panel 23, the facsimile communication device 24, the storage device 26, and so on. The controller 29 performs operation control on each of the above components and signal or data transfer to and from each of the components.

The controller 29 serves as a processor that executes various types of processing necessary for image formation by the image processing apparatus 10. The controller 29 controls the communication operation of the facsimile communication device 26. The controller 29 controls the display operation of the display device 21.

The controller 29 accepts an operating instruction input by a user, based on a detection signal output from the touch panel 23 according to an instruction accepted by the touch panel 23 or based on a user's operation on a physical key of the operation device 22. For example, the controller 29 accepts through the touch panel 23 a touch gesture on a GUI (graphical user interface) or the like being displayed on the screen of the display device 21.

While waiting for a user's operation on the operation device 22, the touch panel 23 or the like, the controller 29 allows the display device 21 to display a home screen HG shown in Fig. 3. The controller 29 allows the display device 21 to display, on the home screen HG, respective function keys 31, 32, 33 for selecting a copy job, a facsimile job, and a scan job, other function keys, and a job execution history 36. The controller 29 allows the display device 21 to display, in the job execution history 36, respective job keys 41, 42, 43 showing sets of setting data on already executed jobs in a row and in chronological order.

The controller 29 allows the display device 21 to display a scroll bar 46 on a side of the job execution history 36. When the user makes a slide gesture on the scroll bar 46, the controller 29 detects through the touch panel 23 an instruction to slide the scroll bar 46 and, in accordance with the slide instruction, allows the display device 21 to perform scrolling display of job keys in the job execution history 36.

For example, when the user touches the function key 31 for selecting a copy job on the home screen HG, the controller 29 accepts through the touch panel 23 an instruction associated with the function key 31 and allows the display device 21 to display, instead of the home screen HG, a function setting screen KG for a copy job shown in Fig. 4. The controller 29 allows the display device 21 to display, on the function setting screen KG for a copy job, a plurality of buttons B and a plurality of boxes T, all of which are for use in setting the set of setting data SJ for a copy job, the job execution history 36, and so on.

The user touches a button B, boxes T or others and inputs through the touch panel 23 instructions related to the size of a recording paper sheet, multicolor print or black-and-white print, the number of copies, and so on. Furthermore, the user places an original document in the image reading device 11 and operates the Start key of the operation device 22 to input an instruction to execute a copy job. The controller 29 accepts through the touch panel 23 instructions associated with the button B, the boxes T or others and generates a set of setting data SJ on a copy job containing data on the size of a recording paper sheet, data on either multicolor print or black-and-white print, data on the number of copies, and other data indicated by the accepted instructions. In accordance with the instruction to execute the copy job and with setting contents based on the set of setting data SJ on the copy job, the controller 29 allows the image reading device 11 to read an image of the original document and allows the image forming device 12 to form the image of the original document on a recording paper sheet.

In doing so, the controller 29 creates a new job key showing the generated set of setting data SJ on the copy job, gives an identifier ID to the new job key, and allows a memory region, for example, formed of a non-volatile memory included in the control device 28, to store the new job key. Furthermore, the controller 29 allows the display device 21 to display the new job key at the top of the job execution history 36 on the home screen HG and display the heretofore displayed job keys below the new job key in a row.

As another example, when the user touches the function key 32 for selecting a facsimile job on the home screen HG, the controller 29 accepts through the touch panel 23 an instruction associated with the function key 32 and allows the display device 21 to display, instead of the home screen HG, a function setting screen for a facsimile job. The user touches a button, boxes or others on the function setting screen for a facsimile job and inputs through the touch panel 23 instructions specifying the resolution, the telephone number of a facsimile machine on the receiving side, and so on. Furthermore, the user places an original document in the image reading device 11 and operates the Start key of the operation device 22 to input an instruction to execute a facsimile job.

In doing so, the controller 29 accepts through the touch panel 23 instructions associated with the above button, boxes or others and generates a set of setting data SJ on a facsimile job specifying the resolution, the telephone number of a destination facsimile machine, and so on indicated by the instructions. In accordance with the instruction to execute the facsimile job and with setting contents specified by the set of setting data SJ on the facsimile job, the controller 29 allows the image reading device 11 to read an image of the original document and sends the image of the original document through the facsimile communication device 24 to the destination.

The controller 29 creates a new job key showing the generated set of setting data SJ on the facsimile job, gives an identifier ID to the new job key, and allows the above-mentioned memory region to store the new job key. Furthermore, the controller 29 allows the display device 21 to display the new job key at the top of the job execution history 36 on the home screen HG and display the heretofore displayed job keys below the new job key in a row.

As yet another example, when the user touches the function key 33 for selecting a scan job on the home screen HG, the controller 29 accepts through the touch panel 23 an instruction associated with the function key 33 and allows the display device 21 to display, instead of the home screen HG, a function setting screen for a scan job. The user touches a button, boxes or others on the function setting screen for a scan job and inputs through the touch panel 23 instructions specifying the resolution, a data destination (such as a USB memory or a memory built in the apparatus), and so on. Furthermore, the user places an original document in the image reading device 11 and operates the Start key of the operation device 22 to input an instruction to execute a scan job.

The controller 29 accepts through the touch panel 23 instructions associated with the above button, boxes or others and generates a set of setting data SJ on a scan job specifying the resolution, the data destination, and so on indicated by the instructions. In accordance with the instruction to execute the scan job and with setting contents specified by the set of setting data SJ on the scan job, the controller 29 allows the image reading device 11 to read an image of the original document and allows the USB memory connected to the image processing apparatus 10 or the memory in the apparatus to store the image of the original document.

The controller 29 creates a new job key showing the generated set of setting data SJ on the scan job, gives an identifier ID to the new job key, and allows the above-mentioned memory region to store the new job key. Furthermore, the controller 29 allows the display device 21 to display the new job key at the top of the job execution history 36 on the home screen HG and display the heretofore displayed job keys below the new job key in a row.

As thus far described, the image processing apparatus 10 executes a copy job, a facsimile job, a scan job or other jobs, creates, at every execution of these jobs, a new job key showing a set of setting data SJ on the job, and allows the new job key to be displayed at the top of the job execution history 36 on the home screen HG. Thus, a plurality of job keys showing respective sets of setting data SJ on jobs are displayed in order of execution of the jobs, i.e., in chronological order, in the job execution history 36.

Furthermore, each time executing a job, the controller 29 allows the storage device 26 to store a set of setting data SJ containing the type of job executed and so on as a piece of job history information RD. The storage device 26 sequentially and chronologically stores respective pieces of job history information RD on jobs, wherein, for example, as shown in Fig. 5, each piece of job history information RD consists of a combination of a set of setting data SJ on a job, the date of execution of the job, and the identifier ID of the job key for the job. The contents of the above combination stored for each job are shown in a job key in the job execution history 36 on the home screen HG.

The controller 29 allows the display device 21 to display a home key HK (see Fig. 4) on each of the function setting screens for a copy job, a facsimile job, a scan job or other jobs. When the user touches the home key, the controller 29 accepts through the touch panel 23 an instruction to switch the screen. In accordance with the instruction to switch the screen, the controller 29 allows the display device 21 to display, instead of the function setting screen for a job, the home screen HG.

In this embodiment, the controller 29 allows the display device 21 to display a plurality of setting items constituting a set of setting data SJ in each job key of the job execution history 36. When the user touches a displayed portion of a setting item of the set of setting data SJ shown in the job key, the controller 29 accepts through the touch panel 23 an instruction to display a pop-up window for use in changing the contents of the setting item, the pop-up window being associated with the setting item of the set of setting data SJ in the job key. In accordance with the instruction to display the pop-up window, the controller 29 allows the display device 21 to display the pop-up window. The pop-up window is an example of a setting change window defined in Claims.

When the user touches the pop-up window and inputs a change instruction to change the contents of the setting item, the controller 29 accepts the change instruction through the touch panel 23 and changes the touched set of setting data SJ (the contents thereof before being changed) on the job based on the contents of the setting item specified by the change instruction (the contents after being changed) to generate a set of setting data SJ on a different job. The controller 29 adds the generated set of setting data SJ on the different job to the job history information RD and allows the storage device 26 to store it. Furthermore, the controller 29 creates a new job key showing the set of setting data SJ on the different job and allows the display device 21 to display the new job key at the top of the job execution history 36.

In this manner, simply by making a touch gesture on a job key in the job execution history 36 without making any touch gesture on the function setting screen for a job, the user can change the value of the setting item for a job shown by the job key and generate a set of setting data SJ on a different job containing the changed contents and a job key for the different job.

Next, a description will be given of a control procedure of job setting processing for, as thus far described, changing a set of setting data SJ shown in a job key of the job execution history 36 and executing a job based on the changed set of setting data SJ on a different job, with reference to the flowchart shown in Fig. 6 and others.

First, the controller 29 allows the display device 21 to display the home screen HG shown in Fig. 3 and waits for a user's touch gesture on the home screen HG (step S101). For example, when the user touches any one of the function keys on the home screen HG, the controller 29 accepts through the touch panel 23 an instruction associated with the touched function key ("FUNCTION KEY" in step S101).

In accordance with the above instruction, the controller 29 allows the display device 21 to display, instead of the home screen HG, a function setting screen for a job where the values of setting items of a function associated with the touched function key are to be input (step S102). In switching the screen displayed by the display device 21, the controller 29 deletes job keys for unexecuted jobs in the job execution history 36 (step S103). In other words, the controller 29 hides the above job keys and deletes the sets of setting data SJ on the unexecuted jobs from the job history information RD. The job keys for unexecuted jobs will be described later in detail.

When detecting through the touch panel 23 a touch gesture on a button, a box or others on the function setting screen for a job, the controller 29 accepts an instruction associated with the touched button, box or others on the function setting screen, sets the value of the setting item based on the contents indicated by the instruction, and generates a set of setting data SJ on a job (step S104). In accordance with an execution instruction input to the operation device 22 by a user's operation on the Start key, the controller 29 executes the job with the contents indicated by the set of setting data SJ (step S105). The controller 29 allows the set of setting data SJ on the job, the date of execution of the job, and the identifier ID of a job key to be stored in the job history information RD in the storage device 26 (step S106). The controller 29 creates a new job key showing the set of setting data SJ and allows the new job key to be displayed at the top of the job execution history 36 on the home screen HG (step S107).

On the other hand, when the user touches any one of job keys in the job execution history 36 on the home screen HG, the controller 29 detects through the touch panel 23 a touch gesture on the job key ("JOB KEY" in step S101) and determines on which portion of a display region of the job key the touch gesture has been made (step S108). The portion where a touch gesture is to be made is, as shown in Fig. 3, either an image 52 representing the type of a job (hereinafter, referred to as a "type of job") or an image 51 representing any one of the setting items constituting the set of setting data SJ on a job (hereinafter, referred to as a "setting item").

For example, when the user touches a type of job 52 in the job key and the controller 29 accepts through the touch panel 23 a specification instruction for specifying the set of setting data on a job shown by the job key ("TYPE" in step S108), the controller 29 allows the display device 21 to display a function setting screen for the job shown by the job key (step S109). When allowing the screen displayed by the display device 21 to be switched in this manner, the controller 29 deletes job keys for unexecuted jobs in the job execution history 36 (step S110). In other words, the controller 29 hides these job keys and deletes the sets of setting data SJ on the unexecuted jobs and the types of the jobs from the job history information RD.

When the user operates the Start key, the controller 29 accepts a job execution instruction associated with the operation on the Start key, and executes, in accordance with the job execution instruction, a job with the contents indicated by the set of setting data SJ of the touched job key (step S111). The controller 29 allows the touched job key to be displayed at the top of the job execution history 36 on the home screen HG (step S112). After the processing in step S112, the controller 29 returns to the processing in step S101.

When accepting a job execution instruction without any gesture on the function setting screen, i.e., without accepting a change instruction for changing the setting contents of the job, the controller 29 executes the job while the contents indicated by the set of setting data SJ of the touched job key are kept unchanged. When accepting a job execution instruction after any gesture is made on the function setting screen, i.e., after accepting a change instruction for changing the setting contents of the job, the controller 29 executes the job with the contents indicated by a set of setting data SJ constituted by changed contents indicated by the change instruction.

When changing the set of setting data SJ, the controller 29 allows the changed set of setting data SJ on the job, the date of execution of the job, and the identifier ID of a job key to be stored in the job history information RD in the storage device 26. The controller 29 creates a new job key showing the set of setting data SJ and allows the new job key to be displayed at the top of the job execution history 36 on the home screen HG.

On the other hand, when the user touches a setting item 51 in the job key and the controller 29 accepts through the touch panel 23 a specification instruction for specifying the set of setting data on a job shown by the job key ("SETTING ITEM" in step S108), as shown in Fig. 7A, the controller 29 allows the display device 21 to display a pop-up window PW for use in instructing a change in the contents of the touched setting item, execution of a job, and so on (step S113).

The controller 29 allows the display device 21 to display in the pop-up window PW, for example, a box 54 as a setting item 51 where the size of a recording paper sheet is to be specified, a Determine key 55, and an Execute key 56.

When the user touches the box 54, the controller 29 accepts through the touch panel 23, for example, an instruction to display a pull-down menu of a plurality of types of recording paper sheet size. When the user touches any one of respective displayed regions of the plurality of types of recording paper sheet size being displayed in the pull-down menu, the controller 29 accepts a size display instruction through the touch panel 23 and, as shown in Fig. 7B, allows a recording paper sheet size indicated by the display instruction to be displayed in the box 54 (step S114). The controller 29 waits for a touch gesture on the Determine key 55 or the Execute key 56 (step S115).

When the user touches the Determine key 55 ("DETERMINE KEY" in step S115), the controller 29 accepts through the touch panel 23 a change instruction to change, for example, the recording paper sheet size as a setting item of the set of setting data SJ to the recording paper sheet size being displayed in the box 54 and changes the recording paper sheet size to the recording paper sheet size being displayed. In other words, the controller 29 generates a set of setting data SJ on a different job containing the setting item indicating the changed recording paper sheet size and allows the set of setting data SJ on the different job to be displayed in the job history information RD in the storage device 26 (step S116).

Furthermore, the controller 29 creates a new job key showing the set of setting data SJ on the different job and allows the display device 21 to display the new job key in a highlighted manner at the top of the job execution history 36 (step S117). The controller 29 allows the display device 21 to display, for highlighting of the above job key, the job key in a different manner from the other job keys, such as enclosing of the job key in bold lines, increase in lightness of the job key or change in color of the job key. After the processing in step S117, the controller 29 returns to the processing in step S113. In this case, in step S113, the controller 29 allows the display device 21 to display the changed recording paper sheet size in the box 54 showing a setting item in the pop-up window PW.

At this time, the controller 29 allows the display device 21 to keep displaying the home screen HG and remains the screen on the display device 21 unswitched. In this case, the controller 29 does not delete job keys for unexecuted jobs in the job execution history 36.

As thus far described, when the user touches any job key in the job execution history 36, a pop-up window PW is displayed on the display device 21 and the contents of a setting item 51 can be changed through the pop-up window PW. Each time the user touches the Determine key 55, a job key showing a set of setting data SJ on a job in which the changed contents of the setting item 51 are reflected is displayed in a highlighted manner at the top of the job execution history 36.

Thus, for example, as shown in Fig. 8, when job keys 41B, 41A, 41 showing respective different sets of setting data SJ on copy jobs are sequentially created based on gestures on the Determine key 55, the job keys 41B, 41A, 41 are sequentially displayed in a highlighted manner in newest-first order from the top of the job execution history 36. The controller 29 allows, among the job keys, job keys for which the jobs are unexecuted to be highlighted.

On the other hand, when the controller 29 allows the display device 21 to display, in the box 54 of the pop-up window PW, a recording paper sheet size indicated by the display instruction (step S114) and waits for a touch gesture on the Determine key 55 or the Execute key 56 (step S115) and, in this state, the user touches the Execute key 56 ("EXECUTE KEY" in step S115), the controller 29 accepts through the touch panel 23 a job execution instruction associated with the Execute key 56 and executes the job with the contents indicated by the set of setting data SJ on the job containing the setting item showing the recording paper sheet size being displayed in the box 54 (step S120).

To sum up, in the case where the set of setting data SJ on a job specified in step S108 is not changed, the controller 29 executes a job with the contents indicated by the specified set of setting data on the job. In the case where the set of setting data SJ on a job specified in step S108 has been changed, the controller 29 executes a job with the contents indicated by the changed set of setting data on the job. The controller 29 allows a job key representing the executed job to be displayed at the top of the job execution history 36 (step S121). After the processing in step S121, the controller 29 returns to the processing in step S101.

As thus far described, when the user touches any job key in the job execution history 36, a pop-up window PW is displayed on the display device 21 and the contents of a setting item 51 can be changed through the pop-up window PW. Thereafter, when the user touches the Execute key 56, a different job in which the changed contents of the setting item 51 are reflected in the set of setting data SJ is immediately executed, based on the set of setting data SJ on the different job, without display of the function setting screen and a job key showing the set of setting data SJ on the different job is displayed at the top of the job execution history 36.

Furthermore, the controller 29 deletes unexecuted job keys, which are highlighted in the job execution history 36, when, as described previously, it switches the home screen HG to the function setting screen for a job in step S103 and step S110. Moreover, the controller 29 deletes highlighted and unexecuted job keys also when it switches the screen displayed on the display device 21 to another layer of screen. When the displayed screen is switched to the function setting screen or the like, a job having new setting contents is executed through operation on the function setting screen and, thus, a new job history is added. Therefore, the controller 29 deletes, from the job history information RD in the storage device 26, sets of setting data SJ on jobs remaining unexecuted and less likely to be used in the future, hides job keys showing the sets of setting data SJ on the jobs to be deleted, and allows a job key showing a set of setting data SJ on another job relatively highly likely to be used in the future to be displayed in the job execution history 36 to make it visible to the user. Thus, it can be prevented that the number of unexecuted job keys remaining displayed in the job execution history 36 increases and, thus, the user can view only useful job keys.

As thus far described, in this embodiment, when a touch gesture is made on a setting item 51 of a set of setting data SJ on any job key in the job execution history 36, a pop-up window PW as a setting change window is displayed on the display device 21. When the contents of the setting item 51 of the set of setting data SJ are changed through the pop-up window PW, a set of setting data SJ on a different job in which the changed contents of the setting item 51 are reflected is generated and a job key showing the set of setting data SJ on the different job containing the changed contents is displayed at the top of the job execution history 36.

As a result, by a relatively small number of touch gestures on a job key in the job execution history 36 without making any touch gesture on the function setting screen for a job, a set of setting data SJ on a different job in which the setting item has been changed and a new job key showing the set of setting data SJ on the different job can be generated.

When the contents of a setting item 51 of a set of setting data SJ are changed through a pop-up window PW and the Execute key 56 in the pop-up window PW is then touched, a set of setting data SJ on a different job in which the changed contents of the setting item 51 are reflected is generated. Furthermore, the different job is executed based on the set of setting data SJ on the different job, a new job key showing the set of setting data SJ on the different job is created, and the new job key is displayed at the top of the job execution history 36.

As a result, by a relatively small number of touch gestures on a job key in the job execution history 36 without making any touch gesture on the function setting screen for a job, a job can be executed according to the set of setting data SJ in which the setting item has been changed.

Although in the above embodiment the controller 29 allows the display device 21 to display in a pop-up window PW a box 54 showing the contents of a setting item 51, the Determine key 55, and the Execute key 56, the present invention is not limited to this embodiment. For example, the controller 29 may omit the display of the Execute key 56 and, as shown in Fig. 9, allow the box 54 and the Determine key 55 to be displayed in the pop-up window PW. In this case, when the user changes the contents of the setting item 51 in the box 54 and instructs the Determine key 55, the controller 29 generates a set of setting data SJ on a different job in which the changed contents of the setting item 51 are reflected, and allows the storage device 26 to store the set of setting data SJ on the different job. Furthermore, the controller 29 creates a new job key showing the set of setting data SJ on the different job and allows the display device 21 to display the new job key at the top of the job execution history 36. When the user touches the type 52 of the new job key, the controller 29 accepts through the touch panel 23 a job execution instruction associated with the type 52 of the job key and executes, in accordance with the job execution instruction, a job with the contents indicated by the set of setting data SJ on the different job.

Furthermore, in the above embodiment, each time the contents of a setting item 51 are changed in a box 54 displayed in a pop-up window PW, the controller 29 generates a set of setting data SJ on a different job in which the changed contents of the setting item 51 are reflected, and allows the display device 21 to display a new job key showing the set of setting data SJ on the different job at the top of the job execution history 36. Although in doing so, for example, as shown in Fig. 8, the controller 29 allows the display device 21 to sequentially display job keys 41B, 41A, 41 showing respective different sets of setting data SJ on copy jobs in newest-first order in a row, the present invention is not limited to this embodiment. For example, each time the contents of a setting item 51 are changed in a box 54 displayed in a pop-up window PW, the controller 29 may allow the display device 21 to display an image where a new job key showing a set of setting data SJ on a different job in which the changed contents of the setting item 51 are reflected is overlaid on an original job key before the contents of the setting item are changed.

For example, as shown in Fig. 10, the controller 29 allows the display device 21 to display job keys 41B, 41A, 41 showing respective different sets of setting data SJ on copy jobs in the form of a series of overlaid layers. In this case, when the user touches the job key being the uppermost of the layers, the controller 29 performs, for a job shown by the touched job key, the processing in step S108 and subsequent steps shown in Fig. 6.

Alternatively, when the user flicks the job key being the uppermost of the layers, the controller 29 accepts through the touch panel 23 an image change instruction associated with the flick gesture and, in accordance with the image change instruction, allows the display device 21 to display the flicked job key as a lowermost layer of the layers and display a job key having been displayed one layer under the flicked job key as a new uppermost layer.

In the above embodiment, in switching the screen of the display device 21 or like cases, the controller 29 deletes unexecuted job keys highlighted in the job execution history 36. However, the present invention is not limited to this embodiment. For example, when the time for which a job key is displayed reaches a predetermined specified time (for example, 24 hours), the controller 29 may delete the job key. In this case, the controller 29 counts, for each unexecuted job key highlighted in the job execution history 36, the display time since the start of display of the job key and deletes the job key when the display time reaches the predetermined specified time.

Although in the above embodiment a multifunction peripheral is used as the image processing apparatus according to the present invention, it is merely illustrative and any other type of image processing apparatus, such as a copying machine, may be used.

The structures, configurations, and processing described in the above embodiment with reference to Figs. 1 to 10 are merely illustrative of the present invention and are not intended to limit the present invention to them.

## Claims

1. An image processing apparatus comprising:
a display device; and
an operation device that accepts an instruction in response to a user's operation,
wherein the image processing apparatus allows the display device to display a job execution history in which respective sets of setting data on a plurality of jobs are chronologically arranged,
when the operation device accepts a specification instruction for specifying the set of setting data on a job in the job execution history, the image processing apparatus allows the display device to display a setting change window for use in instructing a change in the set of setting data specified by the specification instruction, and
when the operation device accepts through the setting change window a change instruction to change the specified set of setting data, the image processing apparatus generates a set of setting data on a different job in which the specified set of setting data on the job has been changed in accordance with contents indicated by the change instruction, and allows the set of setting data on the different job to be displayed in the job execution history.

2. The image processing apparatus according to claim 1, wherein
when the operation device accepts the specification instruction by an operation on a displayed portion of a setting item of the set of setting data on the job, the image processing apparatus allows the display device to display a setting change window for use in instructing a change in contents of the operated setting item, and
when the operation device accepts through the setting change window a change instruction for changing the contents of the setting item as the change instruction, the image processing apparatus generates a set of setting data on a different job in which the contents of the setting item have been changed in accordance with contents indicated by the change instruction.

3. The image processing apparatus according to claim 1, wherein when the operation device accepts an instruction to execute the different job, the image processing apparatus executes the different job based on the set of setting data on the different job.

4. The image processing apparatus according to claim 2, wherein
when the operation device accepts the specification instruction by an operation on a displayed portion of a setting item of the set of setting data on the job, the image processing apparatus allows the display device to display a setting change window for use in instructing a change in contents of the operated setting item and execution of the job, and
when the operation device accepts an instruction to execute the job through the setting change window, the image processing apparatus executes a different job with contents indicated by a set of setting data on the different job in which the contents of the setting item have been changed in accordance with contents indicated by the change instruction.

5. The image processing apparatus according to claim 1, wherein when a screen displayed on the display device is switched to another screen before the operation device accepts an instruction to execute the different job, the image processing apparatus deletes the set of setting data on the different job from the job execution history.

6. The image processing apparatus according to claim 1, wherein when a predetermined time has passed after a start of display of the set of setting data on the different job in the job execution history but before the operation device accepts an instruction to execute the different job, the image processing apparatus deletes the set of setting data on the different job from the job execution history.

7. The image processing apparatus according to claim 1, wherein the image processing apparatus allows the display device to display in the job execution history the set of setting data on the different job, together with a set of setting data on an original job before the set of setting data on the different job is changed, in a row and in chronological order.

8. The image processing apparatus according to claim 1, wherein the image processing apparatus allows the display device to display in the job execution history the set of setting data on the different job in a manner overlaid on a set of setting data on an original job before the set of setting data on the different job is changed.

9. The image processing apparatus according to claim 8, wherein when the operation device accepts a flick gesture on the set of setting data on the different job, the image processing apparatus allows the display device to display in the job execution history the set of setting data on the different job in a manner laid under the set of setting data on the original job.

10. The image processing apparatus according to claim 1, wherein the image processing apparatus allows the display device to display, in the job execution history, the set of setting data on the different job in a manner different from a set of setting data on another job until the different job is executed.

11. A job management program allowing a computer included in an image processing apparatus, the image processing apparatus comprising a display device and an operation device that accepts an instruction in response to a user's operation, to function as a controller that allows the display device to display a job execution history in which respective sets of setting data on a plurality of jobs are chronologically arranged, wherein when the operation device accepts a specification instruction for specifying the set of setting data on a job in the job execution history, the controller allows the display device to display a setting change window for use in instructing a change in the set of setting data specified by the specification instruction, and when the operation device accepts through the setting change window a change instruction to change the specified set of setting data, the controller generates a set of setting data on a different job in which the specified set of setting data on the job has been changed in accordance with contents indicated by the change instruction, and allows the set of setting data on the different job to be displayed in the job execution history.
